# EUROPEAN PATENT SPECIFICATION

(11) **EP 2 947 484 B1**
(45) Date of publication and mention of the grant of the patent: **05.04.2017**
(21) Application number: 15165822.6
(22) Date of filing: 30.04.2015
(51) Int. Cl.: G02B 6/00, F21V 8/00

(54) **A LIGHT EMITTING DEVICE**
LICHTEMITTIERENDE VORRICHTUNG
DISPOSITIF ÉMETTEUR DE LUMIÈRE

(30) Priority: 14.05.2014 EP 14168250
(43) Date of publication of application: 25.11.2015
(73) Proprietor: Philips Lighting Holding B.V., 5656 AE Eindhoven (NL)
(72) Inventor: Hikmet, Rifat Ata Mustafa, 5656AE Eindhoven (NL); Van Bommel, Ties, 5656AE Eindhoven (NL)
(74) Representative: Verweij, Petronella Daniëlle

(56) References cited:
- EP-A2- 1 533 851
- WO-A1-2012/056382
- US-A1- 2010 303 409
- US-A1- 2013 272 029

## Description

### FIELD OF THE INVENTION

The invention relates to a light emitting device comprising a light source adapted for, in operation, emitting light with a first spectral distribution and a light guide adapted for converting the light with the first spectral distribution to light with a second spectral distribution.

### BACKGROUND OF THE INVENTION

High intensity light sources, and particularly white high intensity light sources, are interesting for various applications including spots, headlamps, stage-lighting and digital light projection. For such purposes, it is possible to make use of so-called luminescent concentrators where shorter wavelength light is converted to longer wavelengths in a highly transparent luminescent material. Such a transparent luminescent material is illuminated by LEDs to produce longer wavelengths within the luminescent material. Converted light, which will be waveguided in the luminescent material, is extracted from a surface leading to an intensity gain or, in other words, an increase in brightness.

Such light sources are interesting for applications such as spot lighting and stage-lighting. However, while such light sources can be efficiently used for producing green, yellow and orange light it is difficult to produce well mixed white light by means of such a light source.

Document WO 2012/056382 A1 describes in one embodiment a lighting device comprising a plurality of waveguides and two light sources. The waveguides are provided with a luminescent material arranged in the waveguide. The luminescent materials of each waveguide may be mutually different and are configured to convert light from a light source into luminescent material emission.

However, with such a lighting device the mixing of the light from the light sources and from the luminescent material emission, i.e. the mixing of the different colors of light, is inefficient and inadequate and furthermore the etendue is increased.

### SUMMARY OF THE INVENTION

It is an object of the present invention to overcome this problem, and to provide a light emitting device having an alternative configuration which provides for efficient and thorough mixing of light of different colors, and with which high quality white light and for a low etendue may be obtained.

According to a first aspect of the invention, this and other objects are achieved by means of a light emitting device comprising at least one first light source adapted for, in operation, emitting first light with a first spectral distribution, the first spectral distribution comprising a peak wavelength in the range of 430 nm to 480 nm, at least one second light source adapted for, in operation, emitting second light with a second spectral distribution, the second spectral distribution comprising a peak wavelength in the range of 350 nm to 410 nm, and a light guide comprising at least one first light input surface, at least one second light input surface and a first light exit surface, the at least one first light input surface and the first light exit surface extending at an angle different from zero with respect to each other, the light guide being adapted for receiving the first light with the first spectral distribution at the at least one first light input surface, converting at least a part of the first light with the first spectral distribution to third light with a third spectral distribution, the third spectral distribution comprising a peak wavelength in the range of 500 nm to 800 nm, guiding the third light with the third spectral distribution to the first light exit surface, and coupling at least a part of the third light with the third spectral distribution out of the first light exit surface, the light guide furthermore being adapted for receiving the second light with the second spectral distribution at the at least one second light input surface, guiding the second light with the second spectral distribution to the first light exit surface, and coupling at least a part of the second light with the second spectral distribution out of the first light exit surface, the light emitting device further comprising a luminescent element arranged adjacent to the first light exit surface, the luminescent element being adapted for converting at least a part of the second light with the second spectral distribution to fourth light with a fourth spectral distribution, the fourth spectral distribution comprising a peak wavelength in the range of 430 nm to 500nm.

By providing at least one first light source adapted for, in operation, emitting first light with a first spectral distribution, the first spectral distribution comprising a peak wavelength in the range of 430 nm to 480 nm, and at least one second light source adapted for, in operation, emitting second light with a second spectral distribution, the second spectral distribution comprising a peak wavelength in the range of 350 nm to 410 nm as well as by providing a luminescent element arranged adjacent to the first light exit surface of the light guide and being adapted for converting at least a part of the second light with the second spectral distribution to fourth light with a fourth spectral distribution, the fourth spectral distribution comprising a peak wavelength in the range of 430 nm to 500 nm, wherein the remaining light/spectral distributions will be transmitted without conversion by the luminescent element a light emitting device is provided with which efficient and thorough mixing of light of different colors, and thereby a high quality white light and a low etendue, is obtained.

By furthermore providing a light guide being adapted for converting at least a part of the incoupled light to converted light with a different spectral distribution, a light guide is provided with which a particularly large amount of the converted light will stay in the light guide which can be extracted from one of the surfaces, which in turn leads to a particularly high intensity gain.

Also, by providing the first light exit surface extending in an angle different from zero to the first light input surface a light emitting device is obtained with which more light is coupled into the light guide and with which more light is guided towards the respective light exit surfaces by means of Total Internal Reflection (TIR). This in turn considerably lowers the amount of light lost by exiting the light guide through other surfaces than the first light exit surface and thus increases the intensity of the light emitted through the first light exit surface.

In an embodiment the light guide comprises at least two first light input surfaces, each of the at least two first light input surfaces extending at an angle different from zero with respect to the first light exit surface, and the light guide is adapted for receiving the first light with the first spectral distribution at each of the at least two first light input surfaces, converting at least a part of the first light with the first spectral distribution to third light with a third spectral distribution, the third spectral distribution comprising a peak wavelength in the range of 500 nm to 800 nm, guiding the third light with the third spectral distribution to the first light exit surface, and coupling at least a part of the third light with the third spectral distribution out of the first light exit surface.

Thereby a light emitting device is provided with which it is possible to pump the light guide with an even larger number of first light sources which in turn provides for an increased gain in light output and thus an increased gain in intensity and furthermore to a particularly high brightness of the light emitted by the light emitting device.

In an embodiment the light emitting device further comprises a coupling element arranged at the second light input surface, the coupling element being adapted for coupling the second light with the second spectral distribution into the light guide.

By providing such a coupling element, a light emitting device is provided with which second light emitted by the at least one second light source may be coupled into the light guide in a particularly efficient manner and with particularly low or possibly no coupling losses.

In an embodiment the light emitting device further comprises a first optical element arranged at the first light input surface, the first optical element being adapted for transmitting light in the wavelength range of 430 nm to 480 nm and for reflecting light with a wavelength being larger than 480 nm.

By providing such a first optical element, a light emitting device is provided with which the first light coupled into the light guide is provided with a particularly well defined first spectral distribution. This in turn provides for a particularly high degree of conversion of the first light in the light guide and for a particularly high degree of transmission of converted first light, i.e. of the third light, in the luminescent element, and thus in turn for a particularly well defined spectral distribution of the light emitted by the light emitting device and for a particularly high quality of white light.

In an embodiment the light emitting device further comprises a second optical element arranged at the second light input surface, the second optical element being adapted for transmitting light in the wavelength range of 350 nm to 410 nm and for reflecting light with a wavelength being larger than 430 nm.

By providing such a second optical element, a light emitting device is provided with which the second light coupled into the light guide is provided with a particularly well defined second spectral distribution. This in turn provides for a particularly high degree of transmission of the second light in the light guide and for a particularly high degree of conversion of the second light in the luminescent element, and thus in turn for a particularly well defined spectral distribution of the light emitted by the light emitting device and for a particularly high quality of white light.

In an embodiment the at least one first light source is arranged in optical contact with the at least one first light input surface.

In an embodiment the at least one second light source is arranged in optical contact with the second light input surface.

Thereby a light emitting device is provided with which light emitted by the first light sources and second light sources, respectively, may be received at the first light input surface and at the second light input surface, respectively, of the light guide in a particularly efficient manner and with particularly low or possibly no coupling losses.

In an embodiment the luminescent element has a maximum absorbance in the wavelength range 430 nm to 480 nm being 10 times higher, 30 times higher or 50 times higher than its maximum absorbance in the wavelength range 350 nm to 410 nm.

In other embodiments the luminescent element has an absorbance of more than 1, more than 1.2 or more than 1.5 in the wavelength range of 350 nm to 410 nm.

Thereby a particularly large amount of the second light is converted in the luminescent element, and in turn a particularly well defined spectral distribution of the light emitted by the light emitting device is obtained. It is noted that in general an increase of the absorption of the luminescent element in the wavelength range of 350 nm to 410 nm will result in an increase of the second light that is converted.

In an embodiment the light guide has an absorbance of less than 0.2 in the wavelength range of 350 nm to 410 nm.

In other embodiments the light guide has an absorbance of less than 0.15, less than 0.1 or less than 0.01 in the wavelength range of 350 nm to 410 nm.

Thereby a particularly large amount of the second light is transmitted through the light guide to the luminescent element without being lost, and in turn a particularly well defined spectral distribution of the light emitted by the light emitting device is obtained. It is noted that in general the lower the absorption of the luminescent element in the wavelength range of 350 nm to 410 nm, the larger the amount of the second light being transmitted.

In an embodiment the light guide has an absorbance of more than 0.5, more than 0.7, more than 0.8 or more than 0.9 in the wavelength range of 430 nm to 480 nm when a reflector and/or reflecting component is present on or at the surface opposite to the at least one first light source.

In other embodiments, where no reflecting component is present on the side opposite to the at least one first light source, the light guide has an absorbance of more than 1 , more than 1.2 or more than 1.5 in the wavelength range of 430 nm to 480 nm.

Thereby a particularly large amount of the first light is converted in the light guide, and in turn a particularly well defined spectral distribution of the light emitted by the light emitting device is obtained. It is noted that in general an increase of the absorption of the light guide in the wavelength range of 430 nm to 480 nm will result in an increase of the first light that is converted.

In an embodiment the light guide is any one of luminescent, light concentrating, made of a garnet and any combination thereof.

By providing a luminescent light guide a light emitting device is provided having particularly good and efficient light converting properties.

By providing a light concentrating light guide a light emitting device is provided emitting light having a particularly high brightness.

By providing a light guide made of a garnet or of another transparent luminescent material a light emitting device is provided having particularly good and efficient light guiding properties.

In an embodiment the at least one first light source is a LED, laser diode or OLED.

In an embodiment the at least one second light source is a LED, laser diode or OLED.

The invention further relates to a lamp, a luminaire, or a lighting system comprising a light emitting device according to the invention, the lamp, luminaire and system being used in one or more of the following applications: digital projection, automotive lighting, stage lighting, shop lighting, home lighting, accent lighting, spot lighting, theater lighting, fiber optic lighting, display systems, warning lighting systems, medical lighting applications, microscopy lighting, lighting for analytical equipment, decorative lighting applications.

It is noted that the invention relates to all possible combinations of features recited in the claims.

### BRIEF DESCRIPTION OF THE DRAWINGS

This and other aspects of the present invention will now be described in more detail, with reference to the appended drawings showing embodiment(s) of the invention.
Fig. 1 shows a cross sectional view of a light emitting device comprising a phosphor wheel.
Fig. 2 shows side view of a light guide which is provided with an optical element at an exit surface.
Fig. 3 shows a perspective view of a light guide which is shaped throughout its length such as to provide a shaped light exit surface.
Fig. 4 shows a side view of a light guide which is shaped over a part of its length such as to provide a shaped light exit surface.
Fig. 5 shows a side view of a lighting system with a light guide and additional light sources and which is provided with a filter and a dichroic optical element.
Fig. 6A and 6B show light guides provided with a heat sink element arranged adjacent a surface of the light guide.
Fig. 7 shows a perspective view of a light emitting device having a tapered exit surface.
Fig. 8 shows perspective view of a first embodiment of a light emitting device according to the invention.
Fig. 9 shows a top view of the light emitting device according to Fig. 13.
Fig. 10 shows a graph illustrating the absorbance of an embodiment of a light guide of a light emitting device according to the invention as a function of the wavelength of light guided by the light guide.
Fig. 11 shows a top view of a second embodiment of a light emitting device according to the invention.
Fig. 12 shows a top view of a third embodiment of a light emitting device according to the invention.
Fig. 13 shows a top view of a fourth embodiment of a light emitting device according to the invention.
Fig. 14 shows a top view of a fifth embodiment of a light emitting device according to the invention.

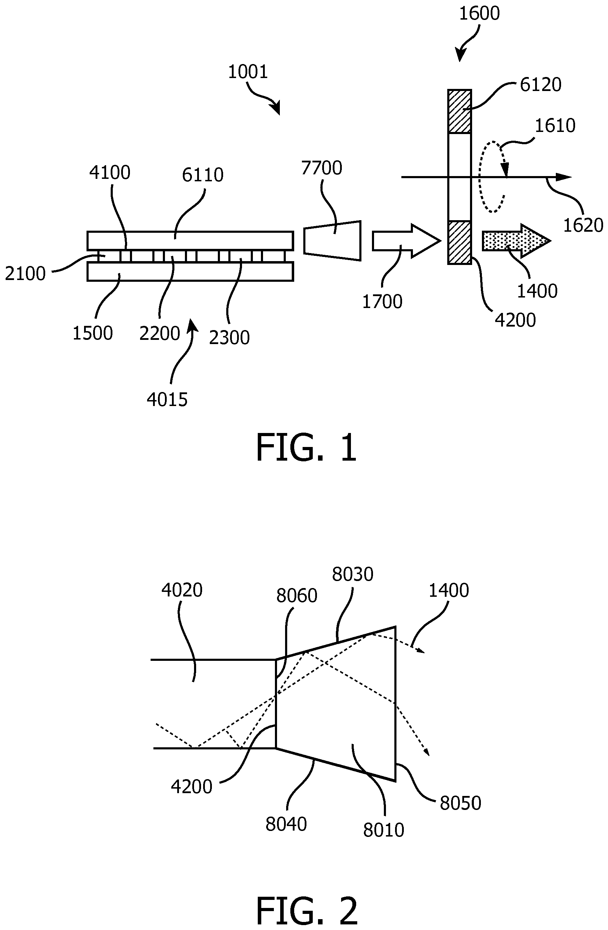

As illustrated in the figures, the sizes of layers, elements and regions are exaggerated for illustrative purposes and, thus, are provided to illustrate the general structures of embodiments of the present invention. Like reference numerals refer to like elements throughout, such that e.g. a light emitting device according to the invention is generally denoted 1, whereas different specific embodiments thereof are denoted by adding 01, 02, 03 and so forth to the general reference numeral. With regard to Figs. 1 to 7 showing a number of features and elements which may be added to any one of the embodiments of a light emitting device according to the invention, "00" has been added to all elements except those specific to one of these Figures.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

The following description will start with general considerations regarding applications, suitable light sources and suitable materials for various elements and features of a light emitting device according to the invention.

Thereupon a number of features and elements which may be added to any one of the embodiments of a light emitting device according to the invention will be described with reference to Figs. 1 to 7.

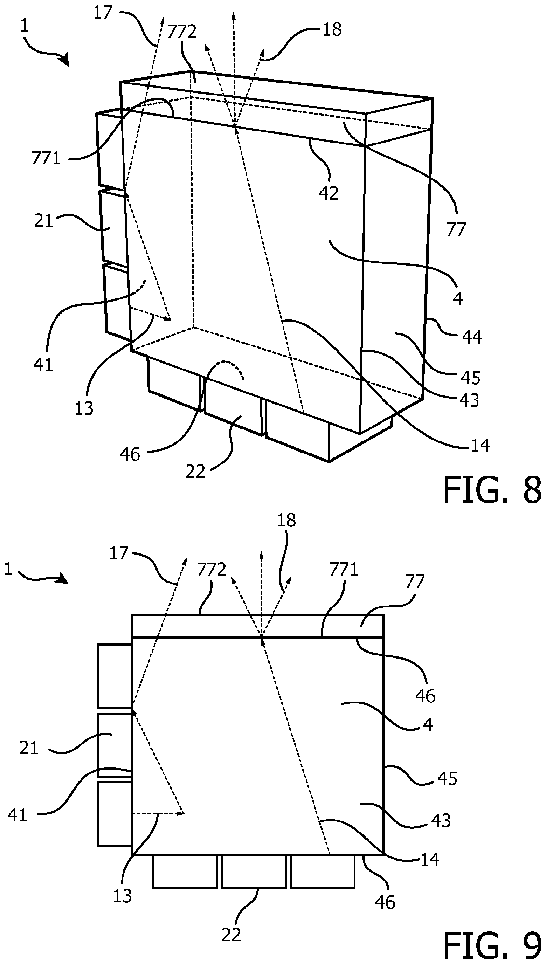

Finally, a number of specific embodiments of a light emitting device according to the invention will be described in detail with reference to Figs. 8 to 14.

Light sources which are part of the embodiments according to the invention as set forth below, are adapted for, in operation, emitting light with a first spectral distribution. This light is subsequently coupled into a light guide or waveguide. The light guide or waveguide may convert the light of the first spectral distribution to another spectral distribution and guides the light to an exit surface. The light source may in principle be any type of point light source, but is in an embodiment a solid state light source such as a Light Emitting Diode (LED), a Laser Diode or Organic Light Emitting Diode (OLED), a plurality of LEDs or Laser Diodes or OLEDs or an array of LEDs or Laser Diodes or OLEDs, or a combination of any of these. In case of a plurality or an array of LEDs or Laser Diodes or OLEDs, the LEDs or Laser Diodes or OLEDs may in principle be LEDs or Laser Diodes or OLEDs of two or more different colors, such as, but not limited to, UV, blue, green, yellow or red.

The light guides as set forth below in embodiments according to the invention generally may be rod shaped or bar shaped light guides comprising a height H, a width W, and a length L extending in mutually perpendicular directions and are in embodiments transparent, or transparent and luminescent. The light is guided generally in the length L direction. The height H is in embodiments < 10 mm, in other embodiments < 5mm, in yet other embodiments < 2 mm. The width W is in embodiments < 10 mm, in other embodiments <5mm, in yet embodiments < 2 mm. The length L is in embodiments larger than the width W and the height H, in other embodiments at least 2 times the width W or 2 times the height H, in yet other embodiments at least 3 times the width W or 3 times the height H. The aspect ratio of the height H : width W is typically 1:1 (for e.g. general light source applications) or 1:2, 1:3 or 1:4 (for e.g. special light source applications such as headlamps) or 4:3, 16:10, 16:9 or 256:135 (for e.g. display applications). The light guides generally comprise a light input surface and a light exit surface which are not arranged in parallel planes, and in embodiments the light input surface is perpendicular to the light exit surface. In order to achieve a high brightness, concentrated, light output, the area of light exit surface may be smaller than the area of the light input surface. The light exit surface can have any shape, but is in an embodiment shaped as a square, rectangle, round, oval, triangle, pentagon, or hexagon.

Transparent light guides may in embodiments comprise a transparent substrate on which a plurality of light sources, for example LEDs, are grown epitaxially. The substrate is in embodiments a single crystal substrate, such as for example a sapphire substrate. The transparent growth substrate of the light sources is in these embodiments the light concentrating light guide.

The generally rod shaped or bar shaped light guide can have any cross sectional shape, but in embodiments has a cross section the shape of a square, rectangle, round, oval, triangle, pentagon, or hexagon. Generally the light guides are cuboid, but may be provided with a different shape than a cuboid, with the light input surface having somewhat the shape of a trapezoid. By doing so, the light flux may be even enhanced, which may be advantageous for some applications.

The light guides may also be cylindrically shaped rods. In embodiments the cylindrically shaped rods have one flattened surface along the longitudinal direction of the rod and at which the light sources may be positioned for efficient incoupling of light emitted by the light sources into the light guide. The flattened surface may also be used for placing heat sinks. The cylindrical light guide may also have two flattened surfaces, for example located opposite to each other or positioned perpendicular to each other. In embodiments the flattened surface extends along a part of the longitudinal direction of the cylindrical rod.

The light guides as set forth below in embodiments according to the invention may also be folded, bended and/or shaped in the length direction such that the light guide is not a straight, linear bar or rod, but may comprise, for example, a rounded corner in the form of a 90 or 180 degrees bend, a U-shape, a circular or elliptical shape, a loop or a 3-dimensional spiral shape having multiple loops. This provides for a compact light guide of which the total length, along which generally the light is guided, is relatively large, leading to a relatively high lumen output, but can at the same time be arranged into a relatively small space. For example luminescent parts of the light guide may be rigid while transparent parts of the light guide are flexible to provide for the shaping of the light guide along its length direction. The light sources may be placed anywhere along the length of the folded, bended and/or shaped light guide.

Suitable materials for the light guides as set forth below according to embodiments of the invention are sapphire, polycrystalline alumina and/or undoped transparent garnets such as YAG, LuAG having a refractive index of n = 1.7. An additional advantage of this material (above e.g. glass) is that it has a good thermal conductivity, thus diminishing local heating. Other suitable materials include, but are not limited to, glass, quartz and transparent polymers. In other embodiments the light guide material is lead glass. Lead glass is a variety of glass in which lead replaces the calcium content of a typical potash glass and in this way the refractive index can be increased. Ordinary glass has a refractive index of n = 1.5, while the addition of lead produces a refractive index ranging up to 1.7.

The light guides as set forth below according to embodiments of the invention may comprise a suitable luminescent material for converting the light to another spectral distribution. Suitable luminescent materials include inorganic phosphors, such as doped YAG, LuAG, organic phosphors, organic fluorescent dyes and quantum dots which are highly suitable for the purposes of embodiments of the present invention as set forth below.

Quantum dots are small crystals of semiconducting material generally having a width or diameter of only a few nanometers. When excited by incident light, a quantum dot emits light of a color determined by the size and material of the crystal. Light of a particular color can therefore be produced by adapting the size of the dots. Most known quantum dots with emission in the visible range are based on cadmium selenide (CdSe) with a shell such as cadmium sulfide (CdS) and zinc sulfide (ZnS). Cadmium free quantum dots such as indium phosphide (InP), and copper indium sulfide (CuInS₂) and/or silver indium sulfide (AgInS₂) can also be used. Quantum dots show very narrow emission band and thus they show saturated colors. Furthermore the emission color can easily be tuned by adapting the size of the quantum dots. Any type of quantum dot known in the art may be used in embodiments of the present invention as set forth below. However, it may be preferred for reasons of environmental safety and concern to use cadmium-free quantum dots or at least quantum dots having very low cadmium content.

Organic fluorescent dyes can be used as well. The molecular structure can be designed such that the spectral peak position can be tuned. Examples of suitable organic fluorescent dyes materials are organic luminescent materials based on perylene derivatives, for example compounds sold under the name Lumogen® by BASF. Examples of suitable compounds include, but are not limited to, Lumogen® Red F305, Lumogen® Orange F240, Lumogen® Yellow F083, and Lumogen® F170.

The luminescent material may also be an inorganic phosphor. Examples of inorganic phosphor materials include, but are not limited to, cerium (Ce) doped YAG (Y₃Al₅O₁₂) or LuAG (Lu₃A₁₅O₁₂). Ce doped YAG emits yellowish light, whereas Ce doped LuAG emits yellow-greenish light. Examples of other inorganic phosphors materials which emit red light may include, but are not limited to ECAS and BSSN; ECAS being Ca₁₋ₓAlSiN₃:Eux wherein 0<x≤1, in other embodiments 0<x≤0.2; and BSSN being Ba_{2-x-z}MₓSi_{5-y}Al_{y}N_{8-y}O_{y}:Eu_{z} wherein M represents Sr or Ca, 0≤x≤1, 0<y≤4, and 0.0005≤z≤0.05, and in embodiments 0≤x≤0.2.

In embodiments of the invention as set forth below, the luminescent material is made of material selected from the group comprising (M<I>_{(1-x-y)}M<II>ₓM<III>_{y})₃ (M<IV>_{(1-z)}M<V>_{z})₅O₁₂ where M<I> is selected from the group comprising Y, Lu or mixtures thereof, M<II> is selected from the group comprising Gd, La, Yb or mixtures thereof, M<III> is selected from the group comprising Tb, Pr, Ce, Er, Nd, Eu or mixtures thereof, M<IV> is Al, M<V> is selected from the group comprising Ga, Sc or mixtures thereof, and 0<x≤1, 0<y≤0.1, 0<z<1, (M<I>_{(1-x-y)}M<II>ₓM<III>_{y})₂ O₃ where M<I> is selected from the group comprising Y, Lu or mixtures thereof, M<II > is selected from the group comprising Gd, La, Yb or mixtures thereof, M<III > is selected from the group comprising Tb, Pr, Ce, Er, Nd, Eu, Bi, Sb or mixtures thereof, and 0<x≤1, 0<y≤0.1, (M<I>_{(1-x-y)}M<II>ₓM<III>_{y})S_{(1-z)} Se where M<I> is selected from the group comprising Ca, Sr, Mg, Ba or mixtures thereof, M<II> is selected from the group comprising Ce, Eu, Mn, Tb, Sm, Pr, Sb, Sn or mixtures thereof, M<III> is selected from the group comprising K, Na, Li, Rb, Zn or mixtures thereof, and 0<x≤0.01, 0<y≤0.05, 0≤z<1, (M<I>_{(1-x-y)}M<II>ₓM<III>_{y})O where M<I> is selected from the group comprising Ca, Sr, Mg, Ba or mixtures thereof, M<II> is selected from the group comprising Ce, Eu, Mn, Tb, Sm, Pr or mixtures thereof, M<III> is selected from the group comprising K, Na, Li, Rb, Zn or mixtures thereof, and 0<x≤0.1, 0<y≤0.1, (M<I>₍₂₋ₓ₎M<II>ₓM<III>₂)O₇ where M<I> is selected from the group comprising La, Y, Gd, Lu, Ba, Sr or mixtures thereof, M<II> is selected from the group comprising Eu, Tb, Pr, Ce, Nd, Sm, Tm or mixtures thereof, M<III> is selected from the group comprising Hf, Zr, Ti, Ta, Nb or mixtures thereof, and 0<x≤1, (M<I>₍₁₋ₓ₎M<II>ₓM<III>_{(1-y)}M<IV>_{y})O₃ where M<I> is selected from the group comprising Ba, Sr, Ca, La, Y, Gd, Lu or mixtures thereof, M<II> is selected from the group comprising Eu, Tb, Pr, Ce, Nd, Sm, Tm or mixtures thereof, M<III> is selected from the group comprising Hf; Zr, Ti, Ta, Nb or mixtures thereof, and M<IV> is selected from the group comprising Al, Ga, Sc, Si or mixtures thereof, and 0<x≤0.1, 0<y≤0.1, or mixtures thereof.

Other suitable luminescent materials are Ce doped Yttrium aluminum garnet (YAG, Y₃Al₅O₁₂) and Lutetium-Aluminum-Garnet (LuAG). A luminescent light guide may comprise a central emission wavelength within a blue color-range or within a green color-range or within a red color-range. The blue color-range is defined between 380 nanometer and 495 nanometer, the green color-range is defined between 495 nanometer and 590 nanometer, and the red color-range is defined between 590 nanometer and 800 nanometer.

A selection of phosphors which may be used in embodiments is given in table 1 below along with the maximum emission wavelength.

**Table 1**

| **Phosphor** | **Maximum emission wavelength [nm]** |
|---|---|
| CaGa₂S₄:Ce | 475 |
| SrGa₂S₄:Ce | 450 |
| BaAl₂S₄:Eu | 470 |
| CaF₂:Eu | 435 |
| Bi₄Si₃O₁₂:Ce | 470 |
| Ca₃Sc₂Si₃O₁₂:Ce | 490 |

The light guides as set forth below according to embodiments of the invention may comprise regions with a different density of suitable luminescent material for converting the light to another spectral distribution. In an embodiment a transparent light guide comprises two parts adjacent to each other and only one of which comprises a luminescent material and the other part is transparent or has a relatively low concentration of luminescent material. In another embodiment the light guide comprises yet another, third part, adjacent to the second part, which comprises a different luminescent material or a different concentration of the same luminescent material. The different parts may be integrally formed thus forming one piece or one light guide. In an embodiment a partially reflecting element may be arranged between the different parts of the light guide, for example between the first part and the second part. The partially reflecting element is adapted for transmitting light with one specific wavelength or spectral distribution and for reflecting light with another, different, specific wavelength or spectral distribution. The partially reflecting element may thus be a dichroic element such as a dichroic mirror.

In another embodiment (not shown) a plurality of wavelength converting regions of luminescent material is arranged at the light input surface of a transparent light guide above or on top of a plurality of light sources, such as LEDs. Thus the surface area of each of the plurality of wavelength converting regions corresponds to the surface area of each of the plurality of light sources such that light from the light sources is coupled into the transparent light guide via the regions of luminescent material. The converted light is then coupled into the transparent part of the light guide and subsequently guided to the light exit surface of the light guide. The wavelength converting regions may be arranged on the light input surface or they may be formed in the light guide. The wavelength converting regions may form part of a homogeneous layer arranged on or in the light guide at the light input surface. Parts of the homogeneous layer extending between two neighboring wavelength converting regions may be transparent and may additionally or alternatively have the same refractive index as the wavelength converting regions. The different wavelength converting regions may comprise mutually different luminescent materials. The distance between the light sources and the luminescent regions may be below 2 mm, below 1 mm or below 0.5 mm.

In embodiments of the light emitting device according to the invention as set forth below a coupling structure or a coupling medium may be provided for efficiently coupling the light emitted by the light source into the light guide. The coupling structure may be a refractive structure having features, such as e.g. protrusions and recesses forming a wave shaped structure. The typical size of the features of the coupling structure is 5 µm to 500 µm. The shape of the features may be e.g. hemispherical (lenses), prismatic, sinusoidal or random (e.g. sand-blasted). By choosing the appropriate shape, the amount of light coupled into the light guide can be tuned. The refractive structures may be made by mechanical means such as by chiseling, sand blasting or the like. Alternatively, the refractive structures may be made by replication in an appropriate material, such as e.g. polymer or sol-gel material. Alternatively, the coupling structure may be a diffractive structure, where the typical size of the features of the diffractive coupling structure is 0.2 µm to 2 µm. The diffraction angles θᵢₙ inside the light guide are given by the grating equation λ/A = nᵢₙ •sinθᵢₙ - nₒᵤₜ •sinθₒᵤₜ, where λ is the wavelength of LED light, A is the grating period, nᵢₙ and nₒᵤₜ are the refractive indices inside and outside the light guide, θᵢₙ and θₒᵤₜ are the diffraction angle inside and the incident angle outside the light guide, respectively. If we assume the same refractive index nₒᵤₜ =1 for low-index layer and coupling medium, we find, with the condition for total internal reflection nᵢₙ sinθᵢₙ = nₒᵤₜ, the following condition: λ/Λ = 1 - sinθₒᵤₜ, i.e. A = λ for normal incidence θₒᵤₜ = 0. Generally, not all other angles θₒᵤₜ are diffracted into the light guide. This will happen only if its refractive index nᵢₙ is high enough. From the grating equation it follows that for the condition nᵢₙ ≥ 2 all angles are diffracted if Λ = λ. Also other periods and refractive indices may be used, leading to less light that is diffracted into the light guide. Furthermore, in general a lot of light is transmitted (0^{th} order). The amount of diffracted light depends on the shape and height of the grating structures. By choosing the appropriate parameters, the amount of light coupled into the light guide can be tuned. Such diffractive structures most easily are made by replication from structures that have been made by e.g. e-beam lithography or holography. The replication may be done by a method like soft nano-imprint lithography. The coupling medium may e.g. be air or another suitable material.

Fig. 1 shows a light emitting device 1001 comprising a light guide 4015 according to embodiments of the invention as set forth below. The light emitting device 1001 shown in Fig. 1 further comprises a rotatable phosphor wheel 1600, and a coupling element 7700 arranged between the light guide 4015 and the phosphor wheel 1600.

The light emitting device 1001 further comprises a light source in the form of a plurality of LEDs 2100, 2200, 2300 arranged on a base or substrate 1500. The plurality of LEDs 2100, 2200, 2300 are used to pump a conversion part 6110 of the light guide 4015 to produce light 1700 having a third spectral distribution, such as green or blue light. The phosphor wheel 1600, which is rotating in a rotation direction 1610 about an axis of rotation 1620, is used for converting the light 1700 having the third spectral distribution to light 1400 having a second spectral distribution, such as red and/or green light. It is noted that in principle any combination of colors of the light 1700 and the light 1400 is feasible.

As shown in Fig. 1, illustrating the phosphor wheel 1600 in a cross sectional side view, the phosphor wheel 1600 is used in the transparent mode, i.e. incident light 1700 enters the phosphor wheel 1600 at one side, is transmitted through the phosphor wheel 1600 and emitted from an opposite side thereof forming the light exit surface 4200. Alternatively, the phosphor wheel 1600 may be used in the reflective mode (not shown) such that light is emitted from the same surface as the surface through which it enters the phosphor wheel.

The phosphor wheel 1600 may comprise only one phosphor throughout. Alternatively, the phosphor wheel 1600 may also comprise segments without any phosphor such that also part of the light 1700 may be transmitted without being converted. In this way sequentially other colors can be generated. In another alternative, the phosphor wheel 1600 may also comprise multiple phosphor segments, e.g. segments of phosphors emitting yellow, green and red light, respectively, such as to create a multi-colored light output. In yet another alternative, the light emitting device 1001 may be adapted for generating white light by employing a pixelated phosphor-reflector pattern on the phosphor wheel 1600.

In an embodiment the coupling element 7700 is an optical element suitable for collimating the light 1700 incident on the phosphor wheel 1600, but it may also be a coupling medium or a coupling structure such as e.g. the coupling medium or the coupling structure 7700 described above. The light emitting device 1001 may furthermore comprise additional lenses and/or collimators. For example, additional optics may be positioned such as to collimate the light emitted by the light sources 2100, 2200, 2300 and/or the light 1400 emitted by the light emitting device 1001.

Fig. 2 shows a light guide 4020 according to embodiments of the invention as set forth below which further comprises an optical element 8010 arranged with a light input facet 8060 in optical connection with a light exit surface 4200 of the light guide 4020. The optical element 8010 is made of a material having a high refractive index, in an embodiment a refractive index which is equal to or higher than that of the light guide 4020, and comprises a quadrangular cross section and two tapered sides 8030 and 8040. The tapered sides 8030 and 8040 are inclined outwardly from the light exit surface 4200 of the light guide 4020 such that the light exit facet 8050 of the optical element 8010 has a larger surface area than both the light input facet 8060 and the light exit surface 4200 of the light guide 4020. The optical element 8010 may alternatively have more than two, particularly four, tapered sides. In an alternative, the optical element 8010 has a circular cross section and one circumferential tapered side. With such an arrangement light will be reflected at the inclined sides 8030 and 8040 and has a large chance to escape if it hits the light exit facet 8050, as the light exit facet 8050 is large compared to the light input facet 8060. The shape of the sides 8030 and 8040 may also be curved and chosen such that all light escapes through the light exit facet 8050.

The optical element may also be integrally formed from the light guide 4020, for example by shaping a part of the light guide such that a predetermined optical element is formed at one of the ends of the light guide. The optical element may for example have the shape of a collimator, or may have a cross-sectional shape of a trapezoid and in an embodiment outside surfaces of the trapezoid shape are provided with reflective layers. Thereby the received light may be shaped such as to comprise a larger spot size while simultaneously minimizing the loss of light through other surfaces than the light exit surface, thus also improving the intensity of the emitted light. In another embodiment the optical element has the shape of a lens array, for example convex or concave lenses or combinations thereof. Thereby the received light may be shaped such as to form focused light, defocused light or a combination thereof. In case of an array of lenses it is furthermore feasible that the emitted light may comprise two or more separate beams each formed by one or more lenses of the array. In more general terms, the light guide may thus have differently shaped parts with different sizes. Thereby a light guide is provided with which light may be shaped in that any one or more of the direction of emission of light from the light exit surface, the beam size and beam shape of the light emitted from the light exit surface may be tuned in a particularly simple manner, e.g. by altering the size and/or shape of the light exit surface. Thus, a part of the light guide functions as an optical element.

The optical element may also be a light concentrating element (not shown) arranged at the light exit surface of the light guide. The light concentrating element comprises a quadrangular cross section and two outwardly curved sides such that the light exit surface of the light concentrating element has a larger surface area than the light exit surface of the light guide. The light concentrating element may alternatively have more than two, particularly four, tapered sides. The light concentrating element may be a compound parabolic light concentrating element (CPC) having parabolic curved sides. In an alternative, the light concentrating element has a circular cross section and one circumferential tapered side. If, in an alternative, the refractive index of the light concentrating element is chosen to be lower than that of the light guide (but higher than that of air), still an appreciable amount of light can be extracted. This allows for a light concentrating element which is easy and cheap to manufacture compared to one made of a material with a high refractive index. For example, if the light guide has a refractive index of n = 1.8 and the light concentrating element has a refractive index of n = 1.5 (glass), a gain of a factor of 2 in light output may be achieved. For a light concentrating element with a refractive index of n = 1.8, the gain would be about 10 % more. Actually, not all light will be extracted since there will be Fresnel reflections at the interface between the optical element or the light concentrating element and the external medium, generally being air. These Fresnel reflections may be reduced by using an appropriate anti-reflection coating, i.e. a quarter-lambda dielectric stack or moth-eye structure. In case the light output as function of position over the light exit facet is inhomogeneous, the coverage with anti-reflection coating might be varied, e.g. by varying the thickness of the coating.

One of the interesting features of a CPC is that the etendue (= n² x area x solid angle, where n is the refractive index) of the light is conserved. The shape and size of the light input facet of the CPC can be adapted to those of the light exit surface of the light guide and/or vice versa. A large advantage of a CPC is that the incoming light distribution is transformed into a light distribution that fits optimally to the acceptable etendue of a given application. The shape of the light exit facet of the CPC may be e.g. rectangular or circular, depending on the desires. For example, for a digital projector there will be requirements to the size (height and width) of the beam, as well as for the divergence. The corresponding etendue will be conserved in a CPC. In this case it will be beneficial to use a CPC with rectangular light input and exit facets having the desired height/width ratio of the display panel used. For a spot light application, the requirements are less severe. The light exit facet of the CPC may be circular, but may also have another shape (e.g. rectangular) to illuminate a particularly shaped area or a desired pattern to project such pattern on screens, walls, buildings, infrastructures etc.. Although CPCs offer a lot of flexibility in design, their length can be rather large. In general, it is possible to design shorter optical elements with the same performance. To this end, the surface shape and/or the exit surface may be adapted, e.g. to have a more curved exit surface such as to concentrate the light. One additional advantage is that the CPC can be used to overcome possible aspect ratio mismatches when the size of the light guide is restrained by the dimensions of the LED and the size of the light exit facet is determined by the subsequent optical components. Furthermore, it is possible to place a mirror (not shown) partially covering the light exit facet of the CPC, e.g. using a mirror which has a 'hole' near or in its center. In this way the exit plane of the CPC is narrowed down, part of the light is being reflected back into the CPC and the light guide, and thus the exit etendue of the light would be reduced. This would, naturally, decrease the amount of light that is extracted from the CPC and light guide. However, if this mirror has a high reflectivity, like e.g. Alanod 4200AG, the light can be effectively injected back into the CPC and light guide, where it may be recycled by TIR. This will not change the angular distribution of the light, but it will alter the position at which the light will hit the CPC exit plane after recycling thus increasing the luminous flux. In this way, part of the light, that normally would be sacrificed in order to reduce the system etendue, can be re-gained and used to increase for example the homogeneity. This is of major importance if the system is used in a digital projection application. By choosing the mirror in the different ways, the same set of CPC and light guide can be used to address systems using different panel sizes and aspect ratio's, without having to sacrifice a large amount of light. In this way, one single system can be used for various digital projection applications.

By using any one of the above structures described with reference to Fig. 2, problems in connection with extracting light from the high-index light guide material to a low-index material like air, particularly related to the efficiency of the extraction, are solved.

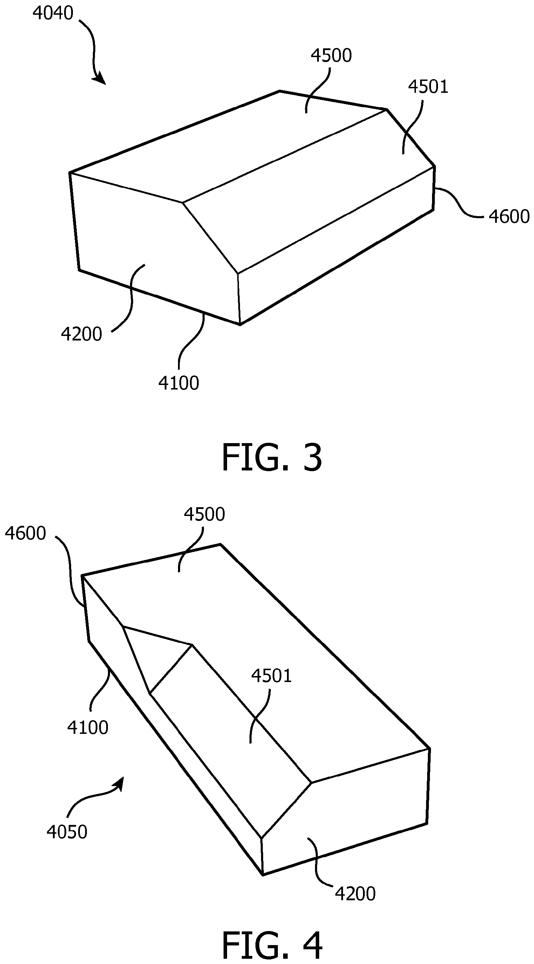

With reference to Figs. 3 and 4 different possibilities for providing a light distribution having a particular shape will be described. Fig. 3 shows a perspective view of a light guide 4040 which is shaped throughout its length in order to provide a shaped light exit surface 4200. The light guide 4040 may be a light guide adapted for converting light with a spectral distribution to light with another spectral distribution. A part 4501 of the light guide 4040 extending throughout the length of the light guide 4040, particularly adjacent to the surface 4500 and opposite to the light input surface 4100, has been removed such as to provide the light guide 4040 with a shape corresponding to the desired shape of the light distribution at the light exit surface 4200, the shape extending throughout the entire length of the light guide 4040 from the light exit surface 4200 to the opposite surface 4600.

Fig. 4 shows a side view of a light guide 4050 which is shaped over a part of its length such as to provide a shaped light exit surface 4200. The light guide 4050 may be a light guide adapted for converting light with a spectral distribution to light with another spectral distribution. A part 4501 of the light guide 4050 extending over a part of the length of the light guide 4050 has been removed, particularly adjacent to the surface 4500 and opposite to the light input surface 4100, such as to provide the light guide 4050 with a shape corresponding to the desired shape of the light distribution at the light exit surface 4200, the shape extending over a part of the length of the light guide 4050 adjacent the light exit surface 4200.

Another part or more than one part of the light guide may be removed such as to provide for other shapes of the light exit surface. Any feasible shape of the light exit surface may be obtained in this way. Also, the light guide may be divided partly or fully into several parts having different shapes, such that more complex shapes may be obtained. The part or parts removed from the light guide may be removed by means of e.g. sawing, cutting or the like followed by polishing of the surface that is exposed after the removal of the part or parts. In another alternative a central part of the light guide may be removed, e.g. by drilling, such as to provide a hole in the light exit surface.

In an alternative embodiment, a light distribution having a particular shape may also be obtained by surface treating, e.g. roughening, a part of the light exit surface of the light guide, whilst leaving the remaining part of the light exit surface smooth. In this embodiment no parts of the light guide need to be removed. Likewise any combination of the above possibilities for obtaining a light distribution having a particular shape is feasible.

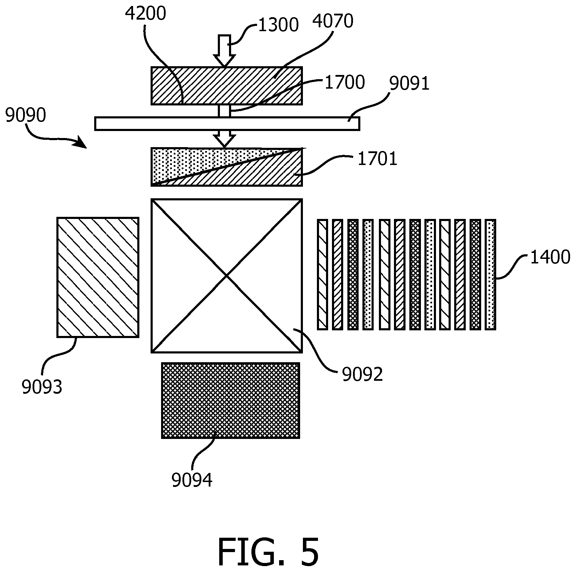

Fig. 5 shows a side view of a lighting system, e.g. a digital projector, with a light guide 4070 according to embodiments of the invention as set forth below and which is adapted for converting incident light 1300 in such a way that the emitted light 1700 is in the yellow and/or orange wavelength range, i.e. roughly in the wavelength range of 560 nm to 600 nm. The light guide 4070 may e.g. be provided as a transparent garnet made of ceramic materials such as Ce-doped (Lu,Gd)₃Al₅O₁₂, (Y,Gd)₃Al₅O₁₂ or (Y,Tb)₃Al₅O₁₂. With higher Ce-content and/or higher substitution levels of e.g. Gd and/or Tb in favor of Ce, the spectral distribution of the light emitted by the light guide can be shifted to higher wavelengths.

At the light exit surface 4200 an optical element 9090 is provided. The optical element 9090 comprises a filter 9091 for filtering the light 1700 emitted from the light guide 4070 such as to provide filtered light 1701, at least one further light source 9093, 9094 and an optical component 9092 adapted for combining the filtered light 1701 and the light from the at least one further light source 9093, 9094 such as to provide a common light output 1400. The filter 9091 may be an absorption filter or a reflective filter, which may be fixed or switchable. A switchable filter may e.g. be obtained by providing a reflective dichroic mirror, which may be low-pass, band-pass or high-pass according to the desired light output, and a switchable mirror and placing the switchable mirror upstream of the dichroic mirror seen in the light propagation direction. Furthermore, it is also feasible to combine two or more filters and/or mirrors to select a desired light output. The filter 9091 shown in Fig. 5 is a switchable filter enabling the transmission of unfiltered yellow and/or orange light or filtered light, particularly and in the embodiment shown filtered red light, according to the switching state of the filter 9091. The spectral distribution of the filtered light depends on the characteristics of the filter 9091 employed. The optical component 9092 as shown may be a cross dichroic prism also known as an X-cube or it may in an alternative be a suitable set of individual dichroic filters.

In the embodiment shown two further light sources 9093 and 9094 are provided, the further light source 9093 being a blue light source and the further light source 9094 being a green light source. Other colors and/or a higher number of further light sources may be feasible too. One or more of the further light sources may also be light guides according to embodiments of the invention as set forth below. A further option is to use the light filtered out by the filter 9091 as a further light source. The common light output 1400 is thus a combination of light 1701 emitted by the light guide 4070 and filtered by the filter 9091 and light emitted by the respective two further light sources 9093 and 9094. The common light output 1400 may advantageously be white light.

The solution shown in Fig. 5 is advantageous in that it is scalable, cost effective and easily adaptable according to the requirements for a given application of a light emitting device according to embodiments of the invention.

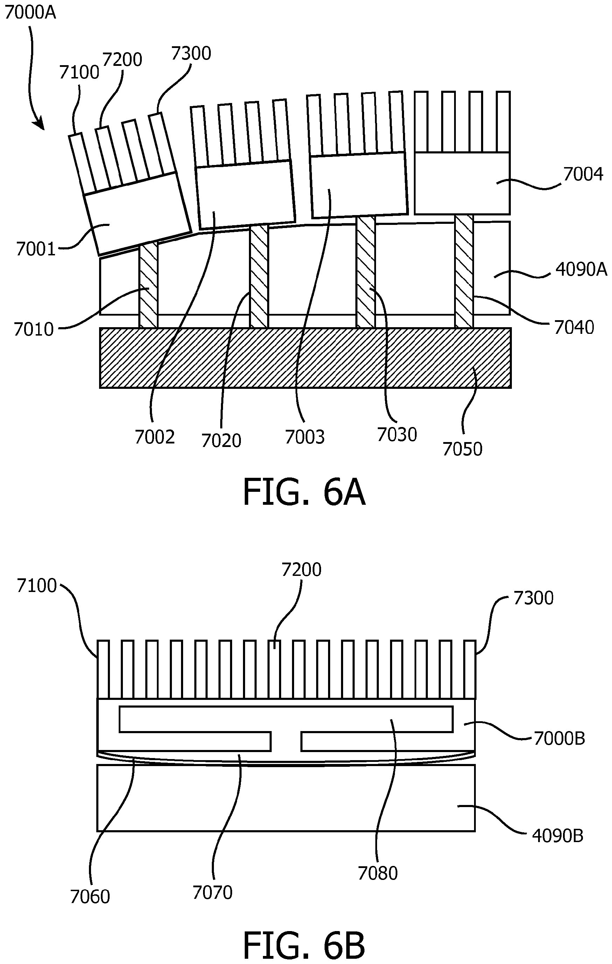

Figs. 6A and 6B show a side view of a light guide 4090A and a light guide 4090B, respectively, and both according to embodiments of the invention as set forth below, that comprise a heat sink element 7000A, 7000B, respectively, arranged on one of the surfaces of the light guide 4090A, 4090B, respectively, different from a light input surface, in embodiments at a distance of about 30 µm or less therefrom. Irrespective of the embodiment the respective heat sink element 7000A, 7000B comprises fins 7100, 7200, 7300 for improved heat dissipation, the fins, however, being optional elements. Irrespective of the embodiment the respective heat sink element 7000A, 7000B is adapted to be conformable to the surface shape of the light guide, and is thus adapted for providing a conformal thermal contact over the whole contact area with the light guide. Thereby an increased thermal contact area and thus an improved cooling of the light guide is obtained and the existing tolerance limits on the positioning of the heat sink element become less critical.

Fig. 6A shows that heat sink element 7000A comprises a plurality of heat sink parts, here four heat sink parts 7001, 7002, 7003 and 7004, one or more of which, here all four, may be provided with fins. Obviously, the more heat sink parts the heat sink element 7000A comprises, the more precisely the heat sink element 7000 may be conformed to the surface of the light guide. Each heat sink part 7001, 7002, 7003, 7004 is adapted for providing a conformal thermal contact over the whole contact area with the light guide. The heat sink parts may be arranged in mutually different distances from the surface of the light guide. Furthermore, the heat sink element 7000A comprises a common carrier 7050 to which the heat sink parts 7001, 7002, 7003 and 7004 are attached individually by means of attachment elements 7010, 7020, 7030 and 7040, respectively. Alternatively each heat sink part may be assigned its own carrier. It is noted that these elements are optional.

Fig. 6B shows that heat sink element 7000B comprises a bottom part 7060 adapted to be conformable to the shape of the surface of the light guide 4090B at which it is to be arranged. The bottom part 7060 is flexible and may e.g. be a thermally conductive metal layer such as a copper layer. The heat sink element 7000B further comprises a thermally conductive layer 7070 arranged between the bottom element 7060 and the remainder of the heat sink element 7000B for improved flexibility and conformability of the heat sink element 7000B. The thermally conductive layer 7070 may e.g. be a thermally conductive fluid or paste. The thermally conductive layer 7070 is in an embodiment highly reflective and/or comprises a highly reflective coating. The heat sink element 7000B further comprises a fluid reservoir 7080 arranged inside the heat sink element 7000B for generating a fluid flow for improved heat dissipation. In an alternative, the fluid reservoir 7080 may also be arranged externally on the heat sink element 7000B, e.g. extending along a part of or the whole external periphery of the heat sink element 7000B. The fluid flow may be enhanced by means of a pump. It is noted that the conductive layer 7070 and the fluid reservoir 7080 are optional elements.

Irrespective of the embodiment, the heat sink element 7000A, 7000B may be made of a material selected from copper, aluminum, silver, gold, silicon carbide, aluminum nitride, boron nitride, aluminum silicon carbide, beryllium oxide, silicon-silicon carbide, aluminum silicon carbide, copper tungsten alloys, copper molybdenum carbides, carbon, diamond, graphite, and combinations of two or more thereof. Furthermore, a heat sink element combining features of the embodiments described above is feasible. Also, it is feasible to arrange a heat sink element according to any of the above embodiments at more than one surface of the light guide 4090A or 4090B.

In embodiments (not shown) a light guide according to embodiments of the invention as set forth below comprises a light polarizing element arranged adjacent to a light exit surface. Thereby a polarized light source having a high brightness and a high efficiency may be obtained. Irrespective of the embodiment the polarizing element may be any one of a reflective linear polarizer and a reflective circular polarizer. Wire grid polarizers, reflective polarizers based on stack of polymer layers comprising birefringent layers are examples of reflective linear polarizers. Circular polarizers can be obtained using polymers in the so-called cholesteric liquid crystal phase to make so-called cholesteric polarizers transmitting only light of one polarization and of a specific spectral distribution. Alternatively or in addition to the reflective polarizers, polarizing beam splitters can also be employed. Furthermore scattering polarizers can also be used. In another embodiment, polarization by reflection may be used, e.g. by means of a polarizing element in the form of a wedge made of a material like glass, in which light is incident close to the Brewster angle. In yet another embodiment, the polarizing element may be a so-called polarized backlight such as described in WO 2007/036877 A2. In yet another embodiment, the polarizing element may be a polarizing structure. In yet other embodiments the polarizing element 9001 is arranged angled with respect to the light exit surface of the light guide, for example in an angle of 45° relative to the light exit surface although any angle is in principle feasible.

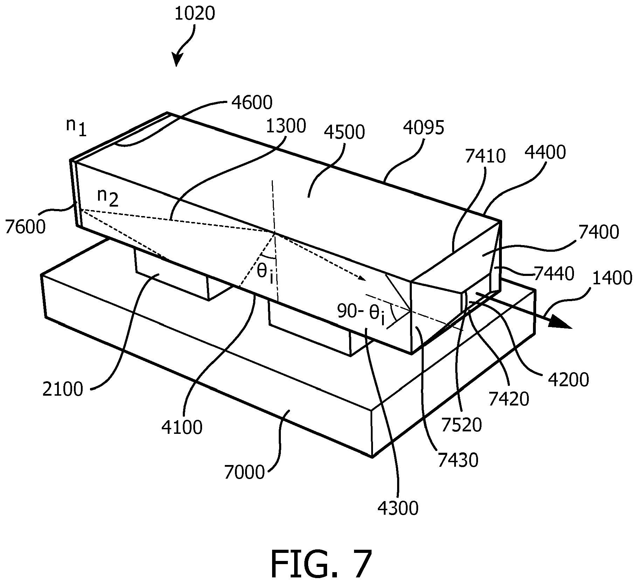

A light exit surface 4200 of a light guide 4095 according to embodiments of the invention as set forth below may be further provided with four inwardly tapered walls and a central flat part extending parallel with a further surface 4600 opposite the light exit surface as shown in Fig. 7. By "tapered wall" as used herein is meant a wall segment of the light exit surface 4200 which is arranged in an angle different from zero degrees to both the remaining part(s) of the light exit surface 4200 and to the surfaces of the light guide extending adjacent to the light exit surface. The walls are tapered inwardly, meaning that the cross-section of the light guide is gradually decreasing towards the exit surface. In an embodiment a mirror element 7400 is arranged at, and is in optical contact with, the tapered walls of the light exit surface. Hence, the mirror element 7400 is provided with four segments 7410, 7420, 7430 corresponding to and covering each of the tapered walls of the light exit surface 4200. A through opening 7520 corresponding to the central flat part of the light exit surface 4200 defines a transparent part of the light exit surface 4200 through which light may exit to be emitted from the light guide 4095. In this way a light guide is provided in which the light rays that hit the mirror element 7400 change angular direction such that more light rays are directed towards the light exit surface 4200 and light rays that previously would remain within the light guide 4095 due to TIR due to the change in angular directions now hit the light exit surface 4200 with angles smaller than the critical angle of reflection and consequently may leave the light guide through the through opening 7520 of the light exit surface 4200. Thereby the intensity of the light emitted by the light emitting device through the light exit surface 4200 of the light guide 4095 is increased further. Because the mirror element is tilted inwards, the light rays change direction after being reflected at that mirror element and may leave the light guide via the transparent part of the mirror element. Thus, this configuration provides for improved guidance of light towards the central flat part of the light exit surface 4200 and thus the through hole 7520 in the second mirror element 7400 by means of reflection off of the tapered walls.

In alternative embodiments other numbers of tapered walls, such as less or more than four, e.g. one, two, three, five or six tapered walls, may be provided, and similarly not all tapered walls need be provided with the mirror element or segments thereof. In other alternatives, one or more of the tapered walls may be uncovered by the mirror element 7400, and/or the central flat part may be covered partly or fully by the second mirror element 7400.

Fig. 8 shows a perspective view of a light emitting device 1 according to a first embodiment of the invention. Fig. 9 shows a top view of the light emitting device 1 according to Fig. 8. The light emitting device 1 generally comprises a plurality of first light sources 21 each comprising at least one solid state light source such as a LED or laser diode, a plurality of second light sources 22 each comprising at least one solid state light source such as a LED or laser diode, a light guide 4 having a first light input surface 41, a second light input surface 46 and a first light exit surface 42 and a luminescent element 77 arranged adjacent to the first light exit surface 42 having a third light input surface 771 and a second light exit surface 772. Suitable types of LEDs or laser diodes are described above.

The light guide 4 is shown here shaped as a square plate however it may be also rod, the first light input surface 41 extending at an angle different from zero with respect to the first light exit surface 42 and the first light exit surface 42 and the second light input surface 46 being mutually opposite surfaces of the light guide 4. In other words, in this embodiment the first light exit surface 42 and the second light input surface 46 are mutually opposite side surfaces of the light guide 4 and the first light input surface 41 is a side surface of the light guide 4 extending between the first light exit surface 42 and the second light input surface 46. The light guide 4 further comprises a side surface 45 extending parallel to and opposite the first light input surface 41 as well as further surfaces 43 and 44, being a top and a bottom surface of the light guide 4, respectively.

It is noted that embodiments in which the angle between the first light input surface 41 and the first light exit surface 42 is less than 90°, equal to 90° and larger than 90° are all feasible, as described above.

The light guide 4 may also be bar or rod shaped or be shaped as a rectangular plate. Furthermore, the light guide 4 may in principle have any feasible cross sectional shape including but not limited to triangular, rectangular, square, trapezoid, polygonal, circular, elliptical and combinations thereof, as described above.

Alternative configurations of the light emitting device according to the invention in which the first light input surface 41 is the top or bottom surface of the light guide are also feasible. Likewise, alternative configurations of the light emitting device according to the invention in which the first light exit surface 42 and the second light input surface 46 are the bottom and top surfaces, respectively, and the first light input surface 41 is a side surface are also feasible.

Furthermore, the light guide 4 comprises a luminescent material, a garnet, a light concentrating material or a combination thereof, suitable materials and garnets being described above. In embodiments the garnet material may comprise cerium with concentration between 0.1 - 2 %. Thus, the light guide 4 is a luminescent and/or light concentrating light guide.

Particularly, the light guide 4 comprises a material with a high absorbance, at least when measured in the direction of propagation of the light emitted by the light sources emitting in the relevant wavelength range, i.e. an absorbance of more than 0.7, more than 1, more than 1.2 or more than 1.5, in the wavelength range of 430 nm to 480 nm and a low absorbance, i.e. an absorbance of less than 0.2, less than 0.15, less than 0.1 or less than 0.05, in the wavelength range of 350 nm to 410 nm.

In the embodiment shown the light emitting device 1 comprises three first light sources 21 and three second light sources 22. In other embodiments another number, e.g. one, two or four, of first light sources 21 and/or another number, e.g. one, two or four, of second light sources 22 may be provided. In yet other embodiments an array of first light sources 21 and/or an array of second light sources 22 may be provided. The number of first light sources 21 and the number of second light sources 22 may be the same or may be different.

The first light sources 21 are arranged directly on the first light input surface 41, for instance by means of an optical adhesive. Likewise, the second light sources 22 are arranged directly on the second light input surface 46, for instance by means of an optical adhesive. In other embodiments the light sources may be arranged on a base or substrate (not shown). The base or substrate may be provided in the form of a heat sink, preferably made of a metal such as copper, iron or aluminum, suitable embodiments being described above. The heat sink may comprise fins for improved heat dissipation. It is noted that in other embodiments the base or substrate need not be a heat sink. Also, as the base or substrate is not essential it may in yet other embodiments even be omitted.

The luminescent element 77 is in this embodiment arranged on the first light exit surface 42 of the light guide 4. Particularly, the third light input surface 771 of the luminescent element 77 is arranged adjacent to the first light exit surface 42 of the light guide 4 and the second light exit surface 772 of the luminescent element extends parallel with and opposite the third light input surface 771.

The luminescent element 77 comprises a luminescent material having a high absorbance, at least when measured in the direction the light travels, i.e. an absorbance of more than 1, more than 1.2, more than 1.3 or more than 1.5, in the wavelength range of 350 nm to 410 nm and emission in the wavelength range of 430 nm to 480 nm. In an embodiment the luminescent material is a phosphor. Suitable luminescent materials and phosphors are described above.

Particularly, the luminescent element 77 comprises a material with a maximum absorbance in the wavelength range 430 nm to 480nm being 10 times higher, 30 times higher or 50 times higher than its maximum absorbance in the wavelength range 350 nm to 410nm.

With reference to Figs. 8 and 9 a light emitting device according to the invention generally works as follows. First light 13 having a first spectral distribution is emitted by each of the at least one first light sources 21. The first light 13 having the first spectral distribution is then coupled into the light guide 4 at the first light input surface 41. At least a part of the light 13 with the first spectral distribution is converted by the light guide 4 to third light 17 having a third spectral distribution. The third light 17 with the third spectral distribution is guided to the first light exit surface 42 and coupled out of the first light exit surface 42. The third light 17 with the third spectral distribution is then coupled into the luminescent element 77 at the third light input surface 771, guided to the second light exit surface 772 and coupled out of the second light exit surface 772.

Second light 14 having a second spectral distribution is emitted by each of the at least one second light sources 22. The second light 14 having the second spectral distribution is then coupled into the light guide 4 at the second light input surface 46, guided through the light guide 4 to the first light exit surface 42, and coupled out of the first light exit surface 42. The second light is then coupled into the luminescent element 77 at the third light input surface 771. At least a part of the second light 14 with the second spectral distribution is converted by the luminescent element 77 to fourth light 18 having a fourth spectral distribution. The fourth light 18 with the fourth spectral distribution is then guided to the second light exit surface 772 and coupling out of the second light exit surface 772. In this way a light emitting device having light output comprising a combination of the third light 17 with the third spectral distribution and the fourth light 18 with the fourth spectral distribution is provided.

Irrespective of the embodiment, the first spectral distribution, i.e. the spectral distribution of the first light emitted by the first light sources, is comprised in the range between 400 nm and 800 nm, and the second spectral distribution, i.e. the spectral distribution of the second light emitted by the second light sources, is comprised in the range between 200 nm and 500 nm.

Furthermore, and irrespective of the embodiment, the first spectral distribution comprises a peak wavelength in the range of 430 nm to 480 nm, the second spectral distribution comprises a peak wavelength in the range of 350 nm to 410 nm, the third spectral distribution comprises a peak wavelength in the range of 500 nm to 800 nm and the fourth spectral distribution comprises a peak wavelength in the range of 430 nm to 480 nm.

In the embodiment shown all first light sources present emit light having substantially the same spectral distribution and all second light sources present emit light having substantially the same spectral distribution. In alternative embodiments it is however feasible that the first and second light sources, respectively, may emit light having two or more different spectral distributions.

Irrespective of the embodiment the first light 13 having the first spectral distribution and the second light 14 having the second spectral distribution may have substantially fully overlapping spectral distributions with different peak wavelengths. Alternatively and still irrespective of the embodiment, the first light 13 having the first spectral distribution and the second light 14 having the second spectral distribution may have different, e.g. partially overlapping or substantially non-overlapping, spectral distributions.

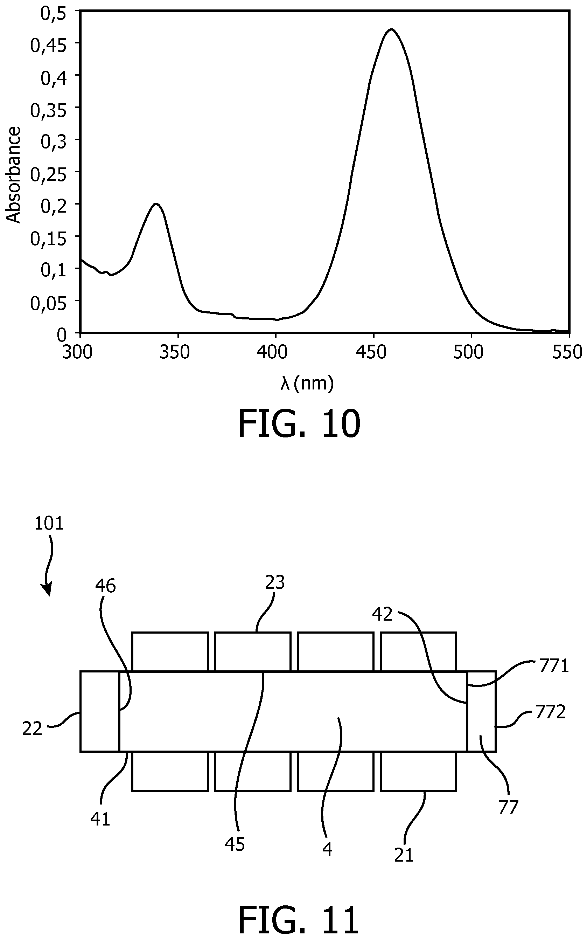

Fig. 10 shows a graph illustrating the absorbance of the material YAG doped with 0.2% cerium which can be used as the light guide 4. As shown in the graph, the light guide material has a low absorbance in the wavelength range of 350 nm to 410 nm, namely less than 0.05. In the wavelength range of 430 nm to 480 nm the light guide material has a high absorbance peaking at just below 0.5 at 460 nm. Finally, in the wavelength range of 500 nm to 800 nm, the light guide has virtually zero absorbance.

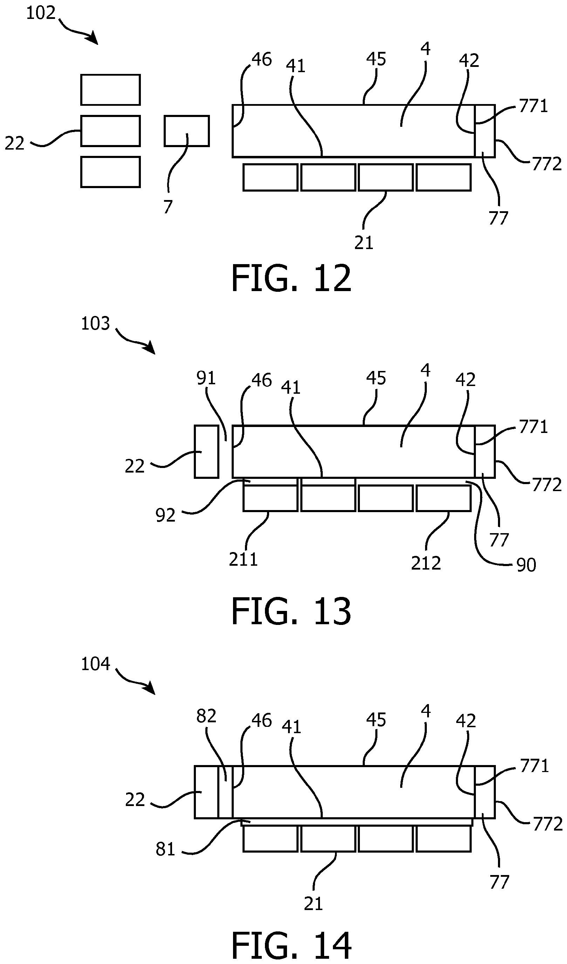

Turning now to Fig. 11, a second embodiment of a light emitting device 101 according to the invention is shown in a top view similar to that of Fig. 9.The light emitting device 101 differs from that shown in Figs. 8 and 14 in that it comprises two first light input surfaces 41 and 45 as well as at least one third light source 23, and in that it is shaped substantially as a rod or stick. Each of the at least two first light input surfaces 41 and 45 extend at an angle different from zero with respect to the first light exit surface 42. Thus, in the embodiment shown, the two first light input surfaces 41 and 45 are opposite side surfaces of the light guide 4, while the second light input surface 46 and the first light exit surface 42 are end surfaces of the light guide 4.

Embodiments in which the two first light input surfaces are adjacent side surfaces of the light guide 4, while the second light input surface and the first light exit surface are end surfaces of the light guide are also feasible. An embodiment in which the two first light input surfaces are end surfaces of the light guide, while the second light input surface and the first light exit surface are opposite side surfaces of the light guide 4 is also feasible. Furthermore, embodiments in which the light guide 4 comprises more than two, e.g. three or four, first light input surfaces are also feasible.

In the embodiment shown four third light sources 23 are provided. In other embodiments another number of third light sources 23, e.g. one, two or five third light sources 23, may be provided. In yet other embodiments an array of third light sources 23 may be provided. In operation, first light 13 having a first spectral distribution is emitted by each of the at least one third light sources 23. Also, in the embodiment shown, the light emitting device 101 comprises four first light sources 21 and one second light source 22.

The light guide 4 of the light emitting device 101 is thus adapted for receiving the first light 13 with the first spectral distribution at each of the at least two first light input surfaces 41 and 45, converting at least a part of the first light 13 with the first spectral distribution to third light 17 with a third spectral distribution, guiding the third light 17 with the third spectral distribution to the first light exit surface 42, and coupling at least a part of the third light 17 with the third spectral distribution out of the first light exit surface 42. Otherwise, the light guide 4 of the light emitting device 101 works as describe above in connection with Figs. 8 and 9.

Turning now to Fig. 12, a third embodiment of a light emitting device 102 according to the invention is shown in a top view similar to that of Fig. 11. The light emitting device 102 differs from that shown in Fig. 11 in that multiple, here three, second light sources 22 are provided, and in that a coupling element 7 is arranged between the second light input surface 46 of the light guide 4 and the second light sources 22. The coupling element 7 is adapted for coupling the second light 14 with the second spectral distribution emitted by the second light sources 22 into the light guide 4. The coupling element 7 may e.g. be an optical adhesive or it may be a refractive component (e.g. a lens or lens array) or a diffractive component such as a grating or a reflective layer or structures. Other suitable coupling elements are described above.

Turning now to Fig. 13, a fourth embodiment of a light emitting device 103 according to the invention is shown in a top view similar to that of Fig. 11. The light emitting device 103 differs from that shown in Fig. 11 in that a gap 91, e.g. in the form of an air gap, is provided between the second light input surface 46 of the light guide 4 and the second light source 22. The light emitting device 103 further differs from that shown in Fig. 11 in that the first light source 211 is arranged in optical contact with the light guide 4, e.g. by means of an optical adhesive 92, while the first light source 212 is arranged in a distance from the light guide 4 and separated therefrom by a gap 90, e.g. in the form of an air gap.

In another embodiment all of the first light sources may be arranged in optical contact with the light guide 4, e.g. by means of an optical adhesive. In yet another embodiment all of the first light sources may be arranged in a distance from the light guide 4 and separated therefrom by a gap, e.g. in the form of an air gap.

Turning now to Fig. 14, a fifth embodiment of a light emitting device 104 according to the invention is shown in a top view similar to that of Fig. 11. The light emitting device 104 differs from that shown in Fig. 11 in that a first optical element 81 is provided between the first light input surface 41 and the first light sources 21. More particularly the first optical element 81 is arranged at or on the first light input surface 41. The first optical element 81 is adapted for transmitting light in the wavelength range of 430 to 480 nm and for reflecting light with a wavelength being larger than 480 nm. The first optical element 81 may for instance be an anti-reflection coating or layer. Alternatively, the first optical element 81 may be a dichroic optical element such as a dichroic filter or mirror.

The light emitting device 104 further differs from that shown in Fig. 11 in that a second optical element 82 is provided between the second light input surface 46 and the second light sources 22. More particularly the second optical element 82 is arranged at or on the second light input surface 46. The second optical element 82 is adapted for transmitting light in the wavelength range of 350 to 410 nm and for reflecting light with a wavelength being larger than 430 nm. The second optical element 82 may for instance be an anti-reflection coating or layer. Alternatively, the second optical element 82 may be a dichroic optical element such as a dichroic filter or mirror. In other embodiments only one of the first optical element 81 and the second optical element 82 may be provided.

The person skilled in the art realizes that the present invention by no means is limited to the preferred embodiments described above. On the contrary, many modifications and variations are possible within the scope of the appended claims.

Particularly, the various elements and features of the various embodiments described herein may be combined freely.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A light emitting device (1) comprising:
at least one first light source (21) adapted for, in operation, emitting first light (13) with a first spectral distribution, the first spectral distribution comprising a peak wavelength in the range of 430 nm to 480 nm,
at least one second light source (22) adapted for, in operation, emitting second light (14) with a second spectral distribution, the second spectral distribution comprising a peak wavelength in the range of 350 nm to 410 nm, and
a light guide (4) comprising at least one first light input surface (41), at least one second light input surface (46) and a first light exit surface (42), the at least one first light input surface and the first light exit surface extending at an angle different from zero with respect to each other,
the light guide (4) being adapted for receiving the first light (13) with the first spectral distribution at the at least one first light input surface (41), converting at least a part of the first light (13) with the first spectral distribution to third light (17) with a third spectral distribution, the third spectral distribution comprising a peak wavelength in the range of 500 to 800 nm, guiding the third light (17) with the third spectral distribution to the first light exit surface (42), and coupling at least a part of the third light (17) with the third spectral distribution out of the first light exit surface,
the light guide furthermore being adapted for receiving the second light (14) with the second spectral distribution at the at least one second light input surface (46), guiding the second light (14) with the second spectral distribution to the first light exit surface (42), and coupling at least a part of the second light (14) with the second spectral distribution out of the first light exit surface,
the light emitting device further comprising a luminescent element (77) arranged adjacent to the first light exit surface, the luminescent element being adapted for converting at least a part of the second light (14) with the second spectral distribution to fourth light (18) with a fourth spectral distribution, the fourth spectral distribution comprising a peak wavelength in the range of 430 nm to 500 nm.

2. A light emitting device according to claim 1, wherein the light guide comprises at least two first light input surfaces (41, 45), each of the at least two first light input surfaces extending at an angle different from zero with respect to the first light exit surface, and
the light guide being adapted for receiving the first light (13) with the first spectral distribution at each of the at least two first light input surfaces (41, 45), converting at least a part of the first light (13) with the first spectral distribution to third light (17) with a third spectral distribution, the third spectral distribution comprising a peak wavelength in the range of 500 nm to 800 nm, guiding the third light (17) with the third spectral distribution to the first light exit surface (42), and coupling at least a part of the third light (17) with the third spectral distribution out of the first light exit surface.

3. A light emitting device according to claim 1 or 2, and further comprising a coupling element (7) arranged at the second light input surface (46), the coupling element being adapted for coupling the second light (14) with the second spectral distribution into the light guide.

4. A light emitting device according to any one of the above claims, and further comprising a first optical element (81) arranged at the first light input surface (41), the first optical element being adapted for transmitting light in the wavelength range of 430 nm to 480 nm and for reflecting light with a wavelength larger than 480 nm.

5. A light emitting device according to any one of the above claims, and further comprising a second optical element (82) arranged at the second light input surface (46), the second optical element being adapted for transmitting light in the wavelength range of 350 nm to 410 nm and for reflecting light with a wavelength larger than 430 nm.

6. A light emitting device according to any one of the above claims, wherein the at least one first light source (21) is arranged in optical contact with the at least one first light input surface (41).

7. A light emitting device according to any one of the above claims, wherein the at least one second light source (22) is arranged in optical contact with the at least one second light input surface (46).

8. A light emitting device according to any one of the above claims, wherein the luminescent element (77) has a maximum absorbance in the wavelength range 430 to 480 nm being 10 times higher, 30 times higher or 50 times higher than its maximum absorbance in the range 350 nm to 410 nm.

9. A light emitting device according to any one of the above claims, wherein the light guide (4) has an absorbance of less than 0.2, less than 0.15, less than 0.1 or less than 0.01 in the wavelength range of 350 nm to 410 nm.

10. A light emitting device according to any one of the above claims, wherein the light guide (4) has an absorbance of more than 0.5, more than 0.7, more than 0.8 or more than 0.9 in the wavelength range of 430 nm to 480 nm when a reflector and/or reflecting component is present on or at the surface opposite to the first light sources, or wherein the light guide (4) has an absorbance of more than 1, more than 1.2 or more than 1.5 in the wavelength range of 430 nm to 480 nm when no reflecting component is present on the side opposite to the at least one first light source (21).

11. A light emitting device according to any one of the above claims, wherein the light guide (4) is any one of luminescent, light concentrating, made of a garnet and any combination thereof.

12. A light emitting device according to any one of the above claims, wherein the light guide (4) is any one of luminescent, light concentrating, made of a garnet and any combination thereof containing cerium with a concentration in the range 1 - 0.2 %.

13. A light emitting device according to any one of the above claims, wherein the at least one first light source (21) is a LED, laser diode or OLED.

14. A light emitting device according to any one of the above claims, wherein the at least one second light source (22) is a LED, laser diode or OLED.

15. A lamp, a luminaire, or a lighting system comprising a light emitting device according to any one of the previous claims, the lamp, luminaire and system being used in one or more of the following applications: digital projection, automotive lighting, stage lighting, shop lighting, home lighting, accent lighting, spot lighting, theater lighting, fiber optic lighting, display systems, warning lighting systems, medical lighting applications, microscopy lighting, lighting for analytical equipment, decorative lighting applications.

## Patentansprüche

1. Lichtemittierende Vorrichtung (1), Folgendes umfassend;
zumindest eine erste Lichtquelle (21), die ausgeführt ist, um im Betrieb ein erstes Licht (13) mit einer ersten spektralen Verteilung zu emittieren, wobei die erste spektrale Verteilung eine Spitzenwellenlänge im Bereich von 430 nm bis 480 nm umfasst,
zumindest eine zweite Lichtquelle (22), die ausgeführt ist, um im Betrieb ein zweites Licht (14) mit einer zweiten spektralen Verteilung zu emittieren, wobei die zweite spektrale Verteilung eine Spitzenwellenlänge im Bereich von 350 nm bis 410 nm umfasst, und
einen Lichtleiter (4), zumindest eine erste Lichteingangsfläche (41), zumindest eine zweite Lichteingangsfläche (46) und eine erste Lichtausgangsfläche (42) umfassend, wobei sich die zumindest eine erste Lichteingangsfläche und die erste Lichtausgangsfläche in einem Winkel ungleich Null im Verhältnis zueinander erstrecken,
wobei der Lichtleiter (4) ausgeführt ist, um das erste Licht (13) mit der ersten spektralen Verteilung an der zumindest einen ersten Lichteingangsfläche (41) zu empfangen, zumindest einen Teil des ersten Lichts (13) mit der ersten spektralen Verteilung in ein drittes Licht (17) mit einer dritten spektralen Verteilung umzuwandeln, wobei die dritte spektrale Verteilung eine Spitzenwellenlänge im Bereich von 500 nm bis 800 nm umfasst, um das dritte Licht (17) mit der dritten spektralen Verteilung zur ersten Lichtausgangsfläche (42) zu leiten und zumindest einen Teil des dritten Lichts (17) mit der dritten spektralen Verteilung aus der ersten Lichtausgangsfläche zu verbinden,
wobei der Lichtleiter darüber hinaus ausgeführt ist, um das zweite Licht (14) mit der zweiten spektralen Verteilung an der zumindest einen zweiten Lichteingangsfläche (46) zu empfangen, das zweite Licht (14) mit der zweiten spektralen Verteilung zur ersten Lichtausgangsfläche (42) zu leiten, und zumindest einen Teil des zweiten Lichts (14) mit der zweiten spektralen Verteilung mit der zweiten spektralen Verteilung aus der ersten Lichtausgangsfläche zu verbinden,
wobei die lichtemittierende Vorrichtung darüber hinaus ein lumineszierendes Element (77) umfasst, das an die erste Lichtausgangsfläche angrenzend angeordnet ist, wobei das lumineszierende Element ausgeführt ist, um zumindest einen Teil des zweiten Lichts (14) mit der zweiten spektralen Verteilung in ein viertes Licht (18) mit einer vierten spektralen Verteilung umzuwandeln, wobei die vierte spektrale Verteilung eine Spitzenwellenlänge im Bereich von 430 nm bis 500 nm umfasst.

2. Lichtemittierende Vorrichtung nach Anspruch 1, wobei der Lichtleiter zumindest zwei erste Lichteingangsflächen (41, 45) umfasst, wobei sich jede der zumindest zwei Lichteingangsflächen in einem Winkel ungleich Null im Verhältnis zur ersten Lichtausgangsfläche erstreckt, und der Lichtleiter ausgeführt ist, um das erste Licht (13) mit der ersten spektralen Verteilung an jeder der zumindest zwei ersten Lichteingangsflächen (41, 45) zu empfangen, um zumindest einen Teil des ersten Lichts (13) mit der ersten spektralen Verteilung in ein drittes Licht (17) mit einer dritten spektralen Verteilung umzuwandeln, wobei die dritte spektrale Verteilung eine Spitzenwellenlänge im Bereich von 500 nm bis 800 nm umfasst, um das dritte Licht (17) mit der dritten spektralen Verteilung zur ersten Lichtausgangsfläche (42) zu leiten, und zumindest einen Teil des dritten Lichts (17) mit der dritten spektralen Verteilung aus der ersten Lichtausgangsfläche zu verbinden.

3. Lichtemittierende Vorrichtung nach Anspruch 1 oder 2, und darüber hinaus ein Verbindungselement (7) umfassend, das an der zweiten Lichteingangsfläche (46) angeordnet ist, wobei das Verbindungselement ausgeführt ist, um das zweite Licht (14) mit der zweiten spektralen Verteilung in den Lichtleiter zu verbinden.

4. Lichtemittierende Vorrichtung nach irgendeinem der vorhergehenden Ansprüche, und darüber hinaus ein erstes optisches Element (81) umfassend, das an der ersten Lichteingangsfläche (41) angeordnet ist, wobei das erste optische Element ausgeführt ist, um Licht im Wellenlängenbereich von 430 nm bis 480 nm zu übertragen und um Licht mit einer Wellenlänge größer als 480 nm zu reflektieren.

5. Lichtemittierende Vorrichtung nach irgendeinem der vorhergehenden Ansprüche, und darüber hinaus ein zweites optisches Element (82) umfassend, das an der zweiten Lichteingangsfläche (46) angeordnet ist, wobei das zweite optische Element ausgeführt ist, um Licht im Wellenlängenbereich von 350 nm bis 410 nm zu übertragen und um Licht mit einer Wellenlänge größer als 430 nm zu reflektieren.

6. Lichtemittierende Vorrichtung nach irgendeinem der vorhergehenden Ansprüche, wobei die zumindest eine erste Lichtquelle (21) in optischem Kontakt mit der zumindest einen ersten Lichteingangsfläche (41) angeordnet ist.

7. Lichtemittierende Vorrichtung nach irgendeinem der vorhergehenden Ansprüche, wobei die zumindest eine zweite Lichtquelle (22) in optischem Kontakt mit der zumindest einen zweiten Lichteingangsfläche (46) angeordnet ist.

8. Lichtemittierende Vorrichtung nach irgendeinem der vorhergehenden Ansprüche, wobei das lumineszierende Element (77) eine maximale Absorption im Wellenlängenbereich von 430 bis 480 nm aufweist, die 10 Mal größer, 30 Mal größer oder 50 Mal größer als seine maximale Absorption im Bereich von 350 bis 410 nm ist.

9. Lichtemittierende Vorrichtung nach irgendeinem der vorhergehenden Ansprüche, wobei der Lichtleiter (4) eine Absorption von weniger als 0,2, weniger als 0,15, weniger als 0,1 oder weniger als 0,01 im Wellenlängenbereich von 350 bis 410nm aufweist.

10. Lichtemittierende Vorrichtung nach irgendeinem der vorhergehenden Ansprüche, wobei der Lichtleiter (4) eine Absorption von mehr als 0,5, mehr als 0,7, mehr als 0,8 oder mehr als 0,9 im Wellenlängenbereich von 430 bis 480 nm aufweist, wenn ein Reflektor und/ oder eine reflektierende Komponente auf oder an der Fläche gegenüber den ersten Lichtquellen vorhanden ist, oder wobei der Lichtleiter (4) eine Absorption von mehr als 1, mehr als 1,2 oder mehr als 1,5 im Wellenlängenbereich von 430 bis 480 nm aufweist, wenn keine reflektierende Komponente auf der Seite gegenüber der zumindest einen ersten Lichtquelle (21) vorhanden ist.

11. Lichtemittierende Vorrichtung nach irgendeinem der vorhergehenden Ansprüche, wobei der Lichtleiter (4) entweder lumineszierend, Licht konzentrierend, aus Granat hergestellt, sowie irgendeine Kombination davon ist.

12. Lichtemittierende Vorrichtung nach irgendeinem der vorhergehenden Ansprüche, wobei der Lichtleiter (4) entweder lumineszierend, Licht konzentrierend, aus Granat hergestellt, sowie irgendeine Kombination davon ist, die Cerium mit einer Konzentration im Bereich von 1 - 0,2 % enthält.

13. Lichtemittierende Vorrichtung nach irgendeinem der vorhergehenden Ansprüche, wobei die zumindest eine erste Lichtquelle (21) eine LED, Laserdiode oder OLED ist.

14. Lichtemittierende Vorrichtung nach irgendeinem der vorhergehenden Ansprüche, wobei die zumindest eine zweite Lichtquelle (22) eine LED, Laserdiode oder OLED ist.

15. Lampe, Leuchte, oder ein Beleuchtungssystem, eine lichtemittierende Vorrichtung nach irgendeinem der vorhergehenden Ansprüche umfassend, wobei die Lampe, Leuchte und das Beleuchtungssystem in einer oder mehreren der folgenden Anwendungen verwendet wird: Digitalprojektion, Automobilbeleuchtung, Bühnenbeleuchtung, Geschäftsbeleuchtung, Wohnungsbeleuchtung, Akzentbeleuchtung, Spot-Beleuchtung, Theaterbeleuchtung, Glasfaserbeleuchtung, Anzeigesysteme, Warnleuchtsysteme, medizinische Beleuchtungsanwendungen, Mikroskop-Beleuchtung, Beleuchtung für analytische Ausrüstungen, dekorative Beleuchtungsanwendungen.

## Revendications

1. Dispositif d'émission de lumière (1), comprenant :
au moins une première source de lumière (21) adaptée pour, en fonctionnement, émettre une première lumière (13) avec une première distribution spectrale, la première distribution spectrale comprenant une longueur d'onde de crête dans la plage de 430 nm à 480 nm,
au moins une seconde source de lumière (22) adaptée pour, en fonctionnement, émettre une deuxième lumière (14) avec une deuxième distribution spectrale, la deuxième distribution spectrale comprenant une longueur d'onde de crête dans la plage de 350 nm à 410 nm, et
un conduit de lumière (4) comprenant au moins une première surface d'entrée de lumière (41), au moins une seconde surface d'entrée de lumière (46) et une première surface de sortie de lumière (42), l'au moins une première surface d'entrée de lumière et la première surface de sortie de lumière s'étendant à un angle différent de zéro l'une par rapport à l'autre,
le conduit de lumière (4) étant adapté pour recevoir la première lumière (13) avec la première distribution spectrale sur l'au moins une première surface d'entrée de lumière (41), convertir au moins une partie de la première lumière (13) avec la première distribution spectrale en troisième lumière (17) avec une troisième distribution spectrale, la troisième distribution spectrale comprenant une longueur d'onde de crête dans la plage de 500 à 800 nm, guider la troisième lumière (17) avec la troisième distribution spectrale vers la première surface de sortie de lumière (42), et coupler au moins une partie de la troisième lumière (17) avec la troisième distribution spectrale hors de la première surface de sortie de lumière,
le conduit de lumière étant en outre adapté pour recevoir la deuxième lumière (14) avec la deuxième distribution spectrale sur l'au moins une seconde surface d'entrée de lumière (46), guider la deuxième lumière (14) avec la deuxième distribution spectrale vers la première surface de sortie de lumière (42), et coupler au moins une partie de la deuxième lumière (14) avec la deuxième distribution spectrale hors de la première surface de sortie de lumière,
le dispositif d'émission de lumière comprenant en outre un élément luminescent (77) agencé de façon adjacente à la première surface de sortie de lumière, l'élément luminescent étant adapté pour convertir au moins une partie de la deuxième lumière (14) avec la deuxième distribution spectrale en quatrième lumière (18) avec une quatrième distribution spectrale, la quatrième distribution spectrale comprenant une longueur d'onde de crête dans la plage de 430 nm à 500 nm.

2. Dispositif d'émission de lumière selon la revendication 1, dans lequel le conduit de lumière comprend au moins deux premières surfaces d'entrée de lumière (41, 45), chacune des au moins deux premières surfaces d'entrée de lumière s'étendant à un angle différent de zéro par rapport à la première surface de sortie de lumière, et le conduit de lumière étant adapté pour recevoir la première lumière (13) avec la première distribution spectrale sur chacune des au moins deux premières surfaces d'entrée de lumière (41, 45), convertir au moins une partie de la première lumière (13) avec la première distribution spectrale en troisième lumière (17) avec une troisième distribution spectrale, la troisième distribution spectrale comprenant une longueur d'onde de crête dans la plage de 500 nm à 800 nm, guider la troisième lumière (17) avec la troisième distribution spectrale vers la première surface de sortie de lumière (42), et coupler au moins une partie de la troisième lumière (17) avec la troisième distribution spectrale hors de la première surface de sortie de lumière.

3. Dispositif d'émission de lumière selon la revendication 1 ou 2, et comprenant en outre un élément coupleur (7) agencé sur la seconde surface d'entrée de lumière (46), l'élément coupleur étant adapté pour coupler la deuxième lumière (14) avec la deuxième distribution spectrale dans le conduit de lumière.

4. Dispositif d'émission de lumière selon l'une quelconque des revendications précédentes, et comprenant en outre un premier élément optique (81) agencé sur la première surface d'entrée de lumière (41), le premier élément optique étant adapté pour transmettre de la lumière dans la plage de longueur d'onde de 430 nm à 480 nm et pour réfléchir de la lumière avec une longueur d'onde supérieure à 480 nm.

5. Dispositif d'émission de lumière selon l'une quelconque des revendications précédentes, et comprenant en outre un second élément optique (82) agencé sur la seconde surface d'entrée de lumière (46), le second élément optique étant adapté pour transmettre de la lumière dans la plage de longueur d'onde de 350 nm à 410 nm et pour réfléchir de la lumière avec une longueur d'onde supérieure à 430 nm.

6. Dispositif d'émission de lumière selon l'une quelconque des revendications précédentes, dans lequel l'au moins une première source de lumière (21) est agencée en contact optique avec l'au moins une première surface d'entrée de lumière (41).

7. Dispositif d'émission de lumière selon l'une quelconque des revendications précédentes, dans lequel l'au moins une seconde source de lumière (22) est agencée en contact optique avec l'au moins une seconde surface d'entrée de lumière (46).

8. Dispositif d'émission de lumière selon l'une quelconque des revendications précédentes, dans lequel l'élément luminescent (77) possède une absorbance maximum dans la plage de longueur d'onde 430 à 480 nm, étant 10 fois supérieure, 30 fois supérieure ou 50 fois supérieure à son absorbance maximum dans la plage 350 nm à 410 nm.

9. Dispositif d'émission de lumière selon l'une quelconque des revendications précédentes, dans lequel le conduit de lumière (4) possède une absorbance inférieure à 0,2, inférieure à 0,15, inférieure à 0,1 ou inférieure à 0,01 dans la plage de longueur d'onde de 350nmà410nm.

10. Dispositif d'émission de lumière selon l'une quelconque des revendications précédentes, dans lequel le conduit de lumière (4) possède une absorbance supérieure à 0,5, supérieure à 0,7, supérieure à 0,8 ou supérieure à 0,9 dans la plage de longueur d'onde de 430 nm à 480 nm lorsqu'un réflecteur et/ou composant réfléchissant est présent par-dessus ou sur la surface opposée à la première source de lumières, ou dans lequel le conduit de lumière (4) possède une absorbance de supérieure à 1, supérieure à 1,2 ou supérieure à 1.5 dans la plage de longueur d'onde de 430 nm à 480 nm lorsqu'aucun composant réfléchissant n'est présent sur le côté opposé à l'au moins une première source de lumière (21).

11. Dispositif d'émission de lumière selon l'une quelconque des revendications précédentes, dans lequel le conduit de lumière (4) est l'un quelconque parmi luminescent, concentrateur de lumière, fait d'un grenat et une quelconque association de ceux-ci.

12. Dispositif d'émission de lumière selon l'une quelconque des revendications précédentes, dans lequel le conduit de lumière (4) est l'un quelconque parmi luminescent, concentrateur de lumière, fait d'un grenat et une quelconque association de ceux-ci contenant du cérium avec une concentration dans la plage 1 à 0,2 %.

13. Dispositif d'émission de lumière selon l'une quelconque des revendications précédentes, dans lequel l'au moins une première source de lumière (21) est une LED, diode laser ou OLED.

14. Dispositif d'émission de lumière selon l'une quelconque des revendications précédentes, dans lequel l'au moins une seconde source de lumière (22) est une LED, diode laser ou OLED.

15. Lampe, luminaire, ou système d'éclairage comprenant un dispositif d'émission de lumière selon l'une quelconque des revendications précédentes, la lampe, le luminaire et le système étant utilisés dans une ou plusieurs des applications suivantes : projection numérique, éclairage pour automobile, éclairage de scène, éclairage de magasin, éclairage domestique, éclairage accentué, éclairage directionnel, éclairage de théâtre, éclairage à fibre optique, systèmes d'affichage, systèmes d'éclairage d'avertissement, application d'éclairage médical, éclairage de microscopie, éclairage pour équipements analytiques, applications d'éclairage de décoration.
